# EUROPÄISCHE PATENTSCHRIFT

(11) **EP 2 367 986 B1**
(45) Veröffentlichungstag und Bekanntmachung des Hinweises auf die Patenterteilung: **01.07.2015**
(21) Anmeldenummer: 09763845.6
(22) Anmeldetag: 20.11.2009
(51) Int. Cl.: E03C 1/00, E03C 1/04

(54) **WASSERARMATURDEKORELEMENT UND VERFAHREN ZUM HERSTELLEN EINES WASSERARMATURDEKORELEMENTS**
DECORATIVE ELEMENT FOR WATER FITTINGS AND METHOD FOR PRODUCING SAID DECORATIVE ELEMENT FOR WATER FITTINGS
ÉLÉMENT DÉCORATIF POUR ROBINETTERIE D'EAU ET PROCÉDÉ DE FABRICATION D'UN ÉLÉMENT DÉCORATIF POUR ROBINETTERIE D'EAU

(30) Priorität: 19.12.2008 DE 102008064547
(43) Veröffentlichungstag der Anmeldung: 28.09.2011
(73) Patentinhaber: Schock GmbH, 94209 Regen (DE)
(72) Erfinder: PATERNOSTER, Rudolf, 94269 Rinchnach (DE); PLEDL, Xaver, 94227 Zwiesel (DE)
(74) Vertreter: Crazzolara, Helmut
(86) Internationale Anmeldenummer: PCT/EP2009/008263
(87) Internationale Veröffentlichungsnummer: WO 2010/069446

(56) Entgegenhaltungen:
- DE-A1- 4 413 903
- DE-A1- 19 853 109

## Beschreibung

Die Erfindung betrifft ein Wasserarmaturdekorelement mit einem aus einem gefüllten Kunststoff hergestellten hülsenförmigen Abschnitt, mit dem das Wasserarmaturdekorelement auf die Wasserarmatur aufsteckbar ist, sowie ein Verfahren zum Herstellen eines Wasserarmaturdekorelements.

Aus der EP 0 386 594 B1 ist ein sanitäres Wasserauslaufventil mit einer Dekorhülse bekannt, die aus Kunststoff hergestellt ist. Die bekannte Dekorhülse wird durch Verchromung oder Lackbeschichtung veredelt, um Wasserauslaufarmaturen in mehrfarbiger Ausführung herstellen zu können.

Aus der DE 100 59 212 A1 ist eine Brausehaltevorrichtung mit einem an einer Gebäudewand oder an einer Wandstange befestigbare Konsole bekannt, an der ein Halteteil um eine Achse verschwenkbar angeordnet ist, wobei das Halteteil wenigstens eine Reibfläche hat, die wenigstens von einem einstellbaren Federelement gegen wenigstens eine drehfest an der Konsole gehaltene Fläche gedrückt ist.

Aus der DE 100 27 213 A1 ist ein Verfahren zur Herstellung eines ringförmigen Gegenstandes bekannt, insbesondere ein Verfahren zur Herstellung von Ventilsitzen durch thermisches Spritzen.

Aus der DE 39 07 894 A1 ist eine Wasserauslaufarmatur bekannt mit einer Schlauchleitung für die Wasserversorgung, wobei ein Griffstück vorgesehen ist, an dessen einem Endbereich die Schlauchleitung anschließbar und an dessen anderen Endbereich ein Wasserauslassmundstück vorgesehen ist, wobei zur Verbesserung und insbesondere zur variablen Gestalt des Handgriffs vorgeschlagen ist, dass das Griffstück als Hülse ausgebildet ist.

Aus der WO 2008/043487 A1 ist eine radikalische Kalthärtung von auf modifizierten Poly(meth)acrylaten mit reaktiven ethylenischen Gruppen basierenden Kunstharzen bekannt.

Aus der DE 44 13 903 A1 ist eine Spenderarmatur bekannt, bei welcher sowohl ein Kopf, ein Spenderohr, ein Sockel und ein Flansch der Armatur aus einem Keramik-Kunststoffmaterial hergestellt sind.

Aus der DE 198 53 109 A1 ist ein Armaturenteil mit einer Granitdekoroberfläche bekannt mit den Merkmalen des Oberbegriffs des Anspruchs 1.

Der Erfindung liegt die Aufgabe zugrunde, ein Wasserarmaturdekorelement bereitzustellen, welches bei hoher ästhetischer Qualität sehr gute Gebrauchseigenschaften aufweist, sowie ein zugehöriges Herstellverfahren bereitzustellen, das derartige Wasserarmaturdekorelemente hervorbringt.

Diese Aufgabe ist durch das im Anspruch 1 bestimmte Wasserarmaturdekorelement und das im nebengeordneten Anspruch bestimmte Herstellverfahren gelöst. Besondere Ausführungsarten der Erfindung sind in den Unteransprüchen bestimmt.

Der hülsenförmige Abschnitt des erfindungsgemäßen Wasserarmaturdekorelements ist aus einem Kompositwerkstoff hergestellt. Der Kompositwerkstoff weist ein ausgehärtetes polymeres Bindemittel, beispielsweise aus der Gruppe der Polyester, Poly(meth-)acrylate, Polyurethane oder Epoxide, mit einem darin eingelagerten partikelförmigen Füllstoff auf. Das Wasserarmaturdekorelement kann außer dem hülsenförmigen Abschnitt noch weitere Abschnitte aufweisen, insbesondere einstückig oder mehrteilig zwei oder mehrere hülsenförmige Abschnitte aufweisen, die hintereinander oder in Schrägstellung zueinander angeordnet sein können. In einer Ausführungsart ist das Wasserarmaturdekorelement allein durch den hülsenförmigen Abschnitt gebildet.

Im Bereich des hülsenförmigen Abschnitts ist auf einer Außenseite, die im Gebrauchszustand eine Sichtseite bildet, der partikelförmige Füllstoff in gleicher oder höherer Konzentration eingelagert als auf einer inneren Mantelfläche, die im Gebrauchszustand eine in der Regel nicht sichtbare Rückseite bildet. Dadurch ist gewährleistet, dass auf der Sichtseite sowohl der ästhetische Eindruck als auch die Gebrauchseigenschaften des hülsenförmigen Abschnitts maßgeblich durch den partikelförmigen Füllstoff bestimmt sind. In einer Ausführungsart ist die Wandstärke des hülsenförmigen Abschnitts größer oder gleich 1 mm, vorzugsweise größer oder gleich 2 mm. In einer Ausführungsart beträgt die Wandstärke zwischen 2 und 5 mm.

Die bei den bekannten Dekorhülsen erforderlichen Verchromungen oder Lackbeschichtungen erfordern zusätzliche Herstellschritte mit entsprechenden Kosten, die bei dem erfindungsgemäßen Wasserarmaturdekorelement entfallen können. Außerdem ist die Anfälligkeit für Kratzer und andere nutzungsbedingte Beschädigungen des Oberflächendekors verhindert oder jedenfalls stark reduziert. Weiterhin ist es möglich, das optische Erscheinungsbild des erfindungsgemäßen Wasserarmaturdekorelements an das Erscheinungsbild der inzwischen weit verbreiteten Kornposit-Spülen und Komposit-Becken anzupassen oder sogar in Übereinstimmung zu bringen, was mit Lackierungen nicht möglich ist.

In einer Ausführungsart ist das Bindemittel mindestens teilweise ein ausgehärtetes Acrylharz, insbesondere Polymethylmethacrylat (PMMA). Durch die Verwendung von Acrylharz sind sehr gute Gebrauchseigenschaften realisierbar, insbesondere eine für polymere Bindemittel verhältnismäßig harte und kratzfeste Oberfläche und darüber hinaus eine hohe Gestaltungsfreiheit hinsichtlich der ästhetischen Farberscheinung.

Der Anteil von PMMA am Bindemittel kann mindestens 50 % betragen. In einer Ausführungsart besteht das Bindemittel zu mindestens 90 % aus PMMA. Das Bindemittel kann im ausgehärteten Zustand farblos und transparent sein. In einer Ausführungsart sind dem Bindemittel Farb- und/oder Effektpigmente zugesetzt, so dass das ausgehärtete Bindemittel unabhängig von dem partikelförmigen Füllstoff eine Eigenfarbe oder einen vorgebbaren optischen Effekt aufweist, beispielsweise einen Metalliceffekt.

Das Wasserarmaturdekorelement kann in vorgebbarem Umfang thermisch verformbar sein. So kann der Werkstoff des Wasserarmaturdekorelements in Plattenform bis zu einem minimalen Biegeradius, der gleich der doppelten Plattenstärke ist, thermoplastisch verformbar sein. Die Oberflächenbearbeitung des erfindungsgemäßen Wasserarmaturdekorelements ist mit den von der Bearbeitung von Naturstein bekannten Standardverfahren möglich.

In einer Ausführungsart weist mindestens ein Teil des Füllstoffes eine größere Härte auf als das Bindemittel. Als Füllstoff können insbesondere mineralische Partikel eingesetzt werden. Bei den Partikeln kann es sich mindestens zum Teil, insbesondere mit einem Anteil von mindestens 50 Gew.%, um ungebrochene Füllstoffkörner handeln, wie sie beispielsweise aus natürlichen Vorkommen stammen. Die Füllstoffe sind vorzugsweise anorganisch und weisen eine Mohshärte von mindestens 5 auf, wie beispielsweise Aluminiumtrihydroxid, oder sogar eine Mohshärte von mindestens 7, wie beispielsweise Quarz oder allgemeiner Siliciumdioxyd (SiO₂).

In einer Ausführungsart beträgt der Anteil des Füllstoffes zwischen 50 und 95 Gew.%, bezogen auf die Masse des hülsenförmigen Abschnitts oder des Wasserarmaturdekorelements, vorzugsweise zwischen 60 und 80 Gew.%. Mindestens 95 Gew.% des Füllstoffes, bezogen auf die Masse des gesamten Füllstoffes, weisen eine Partikelgröße zwischen 0,001 und 5 mm auf, insbesondere weisen mindestens 80 Gew.% eine Partikelgröße zwischen 0,01 und 1 mm auf. In einer Ausführungsart weisen mindestens 80 %, vorzugsweise mindestens 90 % eine Partikelgröße von maximal 0,8 mm auf. Dadurch lässt sich auch in vergleichsweise dünnwandigen hülsenförmigen Abschnitten noch eine homogene Verteilung der Füllstoffpartikel gewährleisten.

In einer Ausführungsart weist mindestens ein Teil des Füllstoffes eine von der Farbe des Bindemittels abweichende Farbe auf. Dabei kann es sich um eine Eigenfarbe der Füllstoffpartikel handeln und/oder mindestens ein Teil des Füllstoffes kann an der Oberfläche eine Farbbeschichtung aufweisen. Durch die Kombination des farblosen oder farbigen Bindemittels mit einem ebenfalls eine Eigenfarbe aufweisenden partikelförmigen Füllstoff kann eine ungleichmäßige und dadurch schmutzunempfindliche Farberscheinung jedenfalls auf der Außenseite des hülsenförmigen Abschnittes bereitgestellt werden. Durch den gegenüber dem Bindemittel eine höhere Härte aufweisenden partikelförmigen Füllstoff kann darüber hinaus die Widerstandsfähigkeit des hülsenförmigen Abschnittes erhöht werden, insbesondere die Kratzfestigkeit und die Abriebfestigkeit.

Der Kompositwerkstoff weist einen geringeren Wärmedurchgang als Naturstein auf, insbesondere einen geringeren Wärmedurchgang als Naturgranit. Dadurch wirkt das Wasserarmaturdekorelement, insbesondere der hülsenförmige Abschnitt, wärmeisolierend, so dass beispielsweise die Temperatur auf der Außenseite des hülsenförmigen Abschnitts selbst bei Entnahme von sehr heißem Wasser niedrig bleibt. Bei Hautkontakt fühlt sich das Wasserarmaturdekorelement auch bei Raumtemperatur warm an, was zu einer angenehmen Haptik führt.

In einer Ausführungsart ist die Oberfläche des hülsenförmigen Abschnitts durch den Kompositwerkstoff gebildet. Durch die Verwendung von unterschiedlichen Farben für das Bindemittel einerseits und den Füllstoff andererseits, gegebenenfalls auch durch unterschiedlich farbige Füllstoffe, kann die Farberscheinung des Wasserarmaturdekorelements nahezu beliebig eingestellt werden, ohne dass es einer Oberflächenbeschichtung oder Lackierung bedarf. Dadurch sind die Gebrauchseigenschaften verbessert, weil insbesondere ein Verkratzen einer Lackierung oder einer Verchromung nicht auftreten kann, weil der hülsenförmige Abschnitt und vorzugsweise auch das Wasserarmaturdekorelement durchgehend aus massivem Material und somit deckschichtenfrei ist. Das Wasserarmaturdekorelement weist keine nach dem Herstellvorgang, insbesondere nach einem Gießformvorgang, aufgebrachte Deckschicht auf.

In einer Ausführungsart ist der hülsenförmige Abschnitt als Gießteil hergestellt. Insbesondere kann hierfür ein Reaktionsgussverfahren eingesetzt werden, beispielsweise mit einer thermisch induzierten Polymerisation eines im Ausgangszustand als Monomer oder Monomer/Polymer-Gemisch vorliegenden Bindemittels. In einer Ausführungsart ist die Oberfläche des hülsenförmigen Abschnitts mindestens teilweise, vorzugsweise ganzflächig auf der Außenseite, durch eine durch das ausgehärtete Bindemittel gebildete Gießhaut gebildet. Dadurch ergibt sich eine leicht zu reinigende Oberfläche.

In einer Ausführungsart ist die Oberfläche des hülsenförmigen Abschnitts mindestens teilweise durch den partikelförmigen Füllstoff gebildet. Die Füllstoffpartikel treten aus dem Bindemittel bis an die Oberfläche hervor. In einer Ausführungsart können mehr als 20 %, vorzugsweise mehr als 30 % und insbesondere mehr als 40 % der Oberfläche des hülsenförmigen Abschnitts, insbesondere der zylindrischen Außenmantelfläche, durch den partikelförmigen Füllstoff gebildet sein. Auf diese Weise kann die Härte und damit die Kratzfestigkeit der Oberfläche erhöht werden.

In einer Ausführungsart weist das Wasserarmaturdekorelement im hülsenförmigen Abschnitt eine spaltfreie und fugenfreie Außenumfangsfläche auf. Die Außenumfangsfläche ist vorzugsweise eine zylindrische, insbesondere kreiszylindrische Mantelfläche. Dadurch ist zum einen die Verletzungsgefahr beim Reinigen verringert, und zum anderen ist die Reinigungsfreundlichkeit insgesamt verbessert, weil sich keine Schmutznester bilden können.

In einer Ausführungsart weist das Wasserarmaturdekorelement an der Sichtseite eine Oberflächenstruktur auf, indem das ausgehärtete Bindemittel zwischen den mineralischen Füllstoffpartikeln kleine Vertiefungen bildet. Das Verhältnis des Abstandes zweier, beispielsweise durch Füllstoffpartikel gebildeter benachbarter lokaler Maxima oder Wellenberge der Oberfläche und der Tiefe der sich zwischen zwei lokalen Maxima oder Wellenbergen erstreckenden Vertiefung beträgt zwischen 50:1 und 2:1.

In einer Ausführungsart ist der Gewichtsanteil des Füllstoffes im hülsenförmigen Abschnitt in Umfangsrichtung annähernd konstant, insbesondere variiert er von einem ersten Achtelsegment zu einem in Umfangsrichtung benachbarten zweiten Achtelsegment um weniger als 10 % vorzugsweise um weniger als 5 % und insbesondere um weniger als 3 %.

Gemäß der Erfindung, in Radialrichtung gibt es eine signifikante Variation des Füllstoffanteils dahingehend, dass auf der Außenseite der Füllstoffanteil höher ist als auf der innen liegenden Seite des hülsenförmigen Abschnitts. Der Anteil von Füllstoffpartikeln in der radial äußeren Hülsenhälfte liegt um mehr als 2 %, insbesondere um mehr als 4 %, höher als in der radial inneren Hülsenhälfte.

In einer Ausführungsart weist der hülsenförmige Abschnitt eine Öffnung für den Durchtritt eines Teils der Wasserarmatur auf, insbesondere für den Durchtritt eines Betätigungselements der Wasserarmatur. Die Öffnung kann eine oblonge Form aufweisen, wobei sich die Längsachse der Öffnung parallel oder rechtwinklig zur Längsachse des hülsenförmigen Abschnitts erstrecken kann. In einer Ausführungsart weist die Öffnung eine geschlossene Randlinie auf.

Die Erfindung betrifft auch ein Verfahren zum Herstellen eines Wasserarmaturdekorelements mit einem aus einem Kunststoff hergestellten hülsenförmigen Abschnitt, mit dem das Wasserarmaturdekorelement auf die Wasserarmatur aufsteckbar ist. Der hülsenförmige Abschnitt wird dabei durch Aushärten eines polymeren Bindemittels mit einem darin eingelagerten partikelförmigen Füllstoff aus einem Kompositwerkstoff hergestellt.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine perspektivische Ansicht einer nur teilweise dargestellten Wasserarmatur mit erfindungsgemäßen Wasserarmaturdekorelementen,
- Fig. 2: zeigt eine perspektivische Ansicht eines weiteren Wasserarmaturdekorelements.

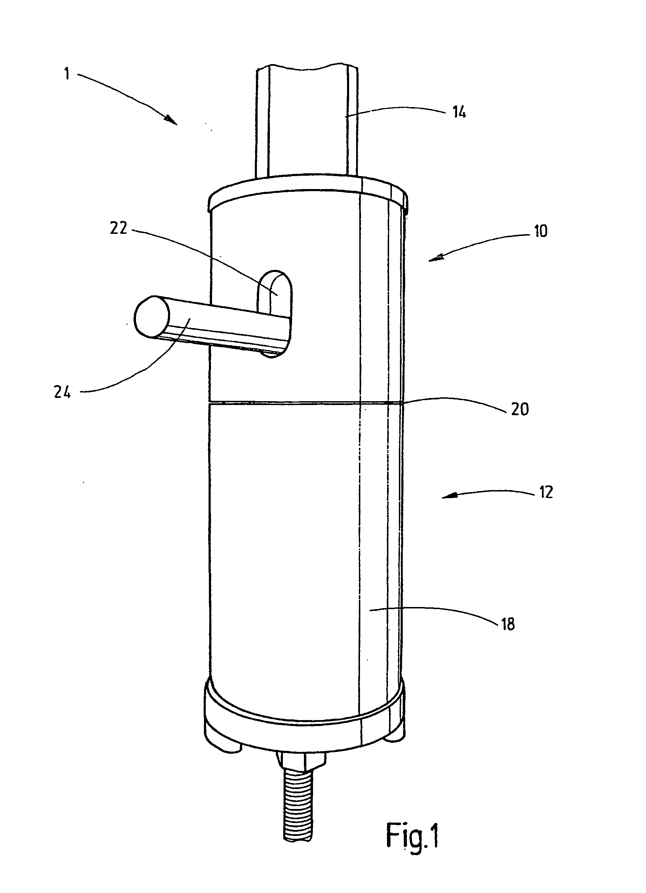

Die Fig. 1 zeigt eine perspektivische Ansicht einer nur teilweise dargestellten Wasserarmatur 1, insbesondere eines Wasserhahns, mit zwei erfindungsgemäßen Wasserarmaturdekorelementen 10, 12, die ihrerseits jeweils nur durch einen hülsenförmigen Abschnitt gebildet und auf einen zylindrischen Abschnitt 14 der Wasserarmatur 1 aufsteckbar sind.

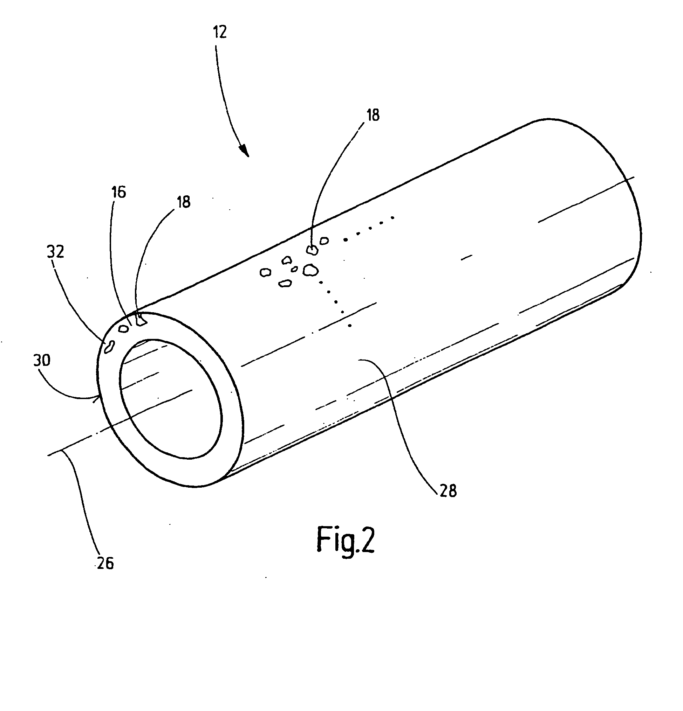

Die Wasserarmaturdekorelemente 10, 12 sind aus einem Kompositwerkstoff hergestellt mit einem ausgehärteten polymeren Bindemittel 16 (Fig. 2) und einem darin eingelagerten partikelförmigen Füllstoff 18. Die Wasserarmaturdekorelemente 10, 12 sind axial in Richtung einer Längsachse des zylindrischen Abschnitts 14 hintereinander und insbesondere fluchtend zueinander angeordnet.

Das Wasserarmaturdekorelement 10 mit der geringeren axialen Erstreckung weist eine oblonge Öffnung 22 auf für den Durchtritt eines Betätigungselements 24 der Wasserarmatur 1. Die Öffnung 22 erstreckt sich parallel zur Längsachse 26 des Wasserarmaturdekorelements 10.

Die Fig. 2 zeigt eine perspektivische Ansicht des Wasserarmaturdekorelements 12, das eine hohlzylindrische Form mit einer kreisringförmigen Querschnittskontur aufweist. Die Länge in Richtung der Längsachse 26 beträgt im Ausführungsbeispiel 100 mm und die Wandstärke 3 mm. Die Außenumfangsfläche 28 ist unbearbeitet und insbesondere so, wie sie durch den Herstellvorgang, beispielsweise ein Gießformvorgang, gebildet ist. An der Stirnseite ist erkennbar, dass die Oberfläche 30 durch eine durch das ausgehärtete Bindemittel 16 gebildete Gießhaut 32 gebildet ist. Die partikelförmigen Füllstoffe 18 sind demgegenüber von der Oberfläche 30 beabstandet. In einem alternativen Ausführungsbeispiel können die Partikel des Füllstoffs 18 mindestens einen Teil der Oberfläche 30 der Außenumfangsfläche 28 bilden.

Das Wasserarmaturdekorelement 10, 12 kann unterschiedliche Füllstoffe 18 aufweisen, die sich hinsichtlich des Werkstoffes, der Größe, der Form und/oder der Farbe unterscheiden können. Im dargestellten Ausführungsbeispiel unterscheiden sich die Füllstoffe 18 insbesondere hinsichtlich ihrer Größe und Farbe, so dass das Wasserarmaturdekorelement 10, 12 eine Granitoptik aufweist.

Eine bevorzugte Zusammensetzung des Wasserarmaturdekorelements 10, 12 besteht aus 60 bis 80 Gew.% kristallinen Quarzsandes, wobei 80 % des Füllstoffes 18 eine Partikelgröße zwischen 0,05 und 1,2 mm aufweisen, und 20 bis 40 % einer Lösung aus Polymethylmethacrylat in Methylmethacrylat als Bindemittel 16, wobei der Anteil des Polymethylmethacrylat an dieser Lösung zwischen 10 und 30 % beträgt. Grundsätzlich eignen sich als Füllstoff 18 alle Mineralien. Soweit durch den Füllstoff 18 die Härte des Wasserarmaturdekorelements 10, 12 erhöht werden soll, sind Füllstoffe 18 vorzuziehen, deren Härte größer ist als die des Bindemittels 16.

Weiterhin kann noch ein peroxydischer Katalysator in einer Menge zwischen 0,5 und 2 Gew.%, bezogen auf das Bindemittelharz, zugesetzt werden sowie 0,1 bis 1 % eines Haftvermittlers, der auch schon als Beschichtung auf dem Füllstoff 18 vorhanden sein kann. Weiterhin kann ein Quervernetzungsmittel zugesetzt werden

In den dargestellten Ausführungsbeispielen ist das Wasserarmaturdekorelement 10, 12 jeweils in der Form einer Hülse ausgebildet, so dass das Wasserarmaturdekorelement 10, 12 außer dem hülsenförmigen Abschnitt keinen weiteren Abschnitt aufweist. Alternativ hierzu kann das Wasserarmaturdekorelement 10, 12 außer einem hülsenförmigen Abschnitt auch noch weitere, gegebenenfalls ebenfalls hülsenförmige Abschnitte aufweisen, die - je nach Form der Wasserarmatur 1 - hintereinander oder schräg zueinander sowie aneinander anstoßend oder beabstandet voneinander angeordnet sein können.

## Patentansprüche

1. Wasserarmaturdekorelement (10, 12) mit einem aus einem Kunststoff hergestellten hülsenförmigen Abschnitt, mit dem das Wasserarmaturdekorelement (10, 12) auf die Wasserarmatur (1) aufsteckbar ist, wobei der hülsenförmige Abschnitt aus einem Kompositwerkstoff hergestellt ist mit einem ausgehärteten polymeren Bindemittel (16) und einem darin eingelagerten partikelförmigen Füllstoff (18), wobei mindestens 95 Gew.% des Füllstoffes (18) eine Partikelgröße zwischen 0,001 und 5 mm aufweisen, **dadurch gekennzeichnet, dass** der Anteil von Füllstoffpartikeln in der radial äußeren Hülsenhälfte um mehr als 2 % höher liegt als in der radial inneren Hülsenhälfte.

2. Wasserarmaturdekorelement (10, 12) nach Anspruch 1, **dadurch gekennzeichnet, dass** die Oberfläche (30) des hülsenförmigen Abschnitts durch den Kompositwerkstoff gebildet ist.

3. Wasserarmaturdekorelement (10, 12) nach einem der vorangehenden Ansprüche, **dadurch gekennzeichnet, dass** der Anteil des Füllstoffes (18) zwischen 50 und 95 Gew.% , vorzugsweise zwischen 60 und 80 Gew.%, bezogen auf die Masse des hülsenförmigen Abschnitts beträgt.

4. Wasserarmaturdekorelement (10, 12) nach einem der vorangehenden Ansprüche, **dadurch gekennzeichnet, dass** mindestens 80 Gew.% des Füllstoffes (18) eine Partikelgröße zwischen 0,01 und 1 mm aufweisen.

5. Wasserarmaturdekorelement (10, 12) nach Anspruch 1 oder 2, **dadurch gekennzeichnet, dass** mindestens ein Teil des Füllstoffes (18) eine größere Härte aufweist als das Bindemittel (16).

6. Wasserarmaturdekorelement (10, 12) nach einem der vorangehenden Ansprüche, **dadurch gekennzeichnet, dass** mindestens ein Teil des Füllstoffes (18) eine Mohshärte von mindestens 5 aufweist, insbesondere mindestens 7.

7. Wasserarmaturdekorelement (10, 12) nach einem der vorangehenden Ansprüche, **dadurch gekennzeichnet, dass** das Bindemittel (16) mindestens teilweise ein ausgehärtetes Acrylharz ist.

8. Wasserarmaturdekorelement (10, 12) nach einem der vorangehenden Ansprüche, **dadurch gekennzeichnet, dass** mindestens ein Teil des Füllstoffes (18) eine von der Farbe des Bindemittels (16) abweichende Farbe aufweist.

9. Wasserarmaturdekorelement (10, 12) nach einem der vorangehenden Ansprüche, **dadurch gekennzeichnet, dass** mindestens ein Teil des Füllstoffes (18) an seiner Oberfläche (30) eine Farbbeschichtung aufweist.

10. Wasserarmaturdekorelement (10, 12) nach einem der vorangehenden Ansprüche, **dadurch gekennzeichnet, dass** der hülsenförmige Abschnitt als Gießteil hergestellt ist, und dass die Oberfläche (30) des hülsenförmigen Abschnitts mindestens teilweise durch eine durch das ausgehärtete Bindemittel (16) gebildete Gießhaut (32) gebildet ist.

11. Wasserarmaturdekorelement (10, 12) nach einem der vorangehenden Ansprüche, **dadurch gekennzeichnet, dass** das ausgehärtete Bindemittel zwischen den vorzugsweise mineralischen Füllstoffpartikeln kleine Vertiefungen bildet.

12. Wasserarmaturdekorelement (10, 12) nach einem der vorangehenden Ansprüche, **dadurch gekennzeichnet, dass** die Oberfläche (30) des hülsenförmigen Abschnitts mindestens teilweise durch den partikelförmigen Füllstoff (18) gebildet ist.

13. Wasserarmaturdekorelement (10, 12) nach einem der vorangehenden Ansprüche, **dadurch gekennzeichnet, dass** das Wasserarmaturdekorelement (10, 12) im hülsenförmigen Abschnitt eine spaltfreie und fugenfreien Außenumfangsfläche (28) aufweist.

14. Wasserarmaturdekorelement (10, 12) nach einem der vorangehenden Ansprüche, **dadurch gekennzeichnet, dass** der Gewichtsanteil des Füllstoffes (18) im hülsenförmigen Abschnitt in Umfangsrichtung in Achtelsegmenten um weniger als 10 % variiert, vorzugsweise um weniger als 5 % und insbesondere um weniger als 3 %.

15. Wasserarmaturdekorelement (10, 12) nach einem der vorangehenden Ansprüche, **dadurch gekennzeichnet, dass** der Anteil von Füllstoffpartikeln in der radial äußeren Hülsenhälfte um mehr als 4 % höher liegt als in der radial inneren Hülsenhälfte.

16. Wasserarmaturdekorelement (10, 12) nach einem der vorangehenden Ansprüche, **dadurch gekennzeichnet, dass** der hülsenförmige Abschnitt eine Öffnung (22) für den Durchtritt eines Teils (24) der Wasserarmatur (1) aufweist.

17. Verfahren zum Herstellen eines Wasserarmaturdekorelements (10, 12) mit einem aus einem Kunststoff hergestellten hülsenförmigen Abschnitt, mit dem das Wasserarmaturdekorelement (10, 12) auf die Wasserarmatur (1) aufsteckbar ist, wobei der hülsenförmige Abschnitt aus einem Kompositwerkstoff hergestellt wird durch Aushärten eines polymeren Bindemittels (16) mit einem darin eingelagerten partikelförmigen Füllstoff (18), wobei mindestens 95 Gew.% des Füllstoffes (18) eine Partikelgröße zwischen 0,001 und 5 mm aufweisen, und dass der Anteil von Füllstoffpartikeln in der radial äußeren Hülsenhälfte um mehr als 2 % höher liegt als in der radial inneren Hülsenhälfte.

18. Verfahren nach Anspruch 16, **dadurch gekennzeichnet, dass** das Einrichtungsdekorelement (10) durch Gießformen hergestellt wird.

## Claims

1. The decorative element (10, 12) for water fittings with a sleeve-type section produced from plastic, and with which the decorative element (10, 12) for water fittings can be slipped onto the water fitting (1), the sleeve-type section being produced from a composite material with a cured polymer binder (16) and a particulate filler (18) incorporated into the latter, at least 95% by weight of the filler (18) having a particle size of between 0.001 and 5 mm, **characterised in that** the proportion of filler particles in the radially outer sleeve half is higher by more than 2% than in the radially inner sleeve half.

2. The decorative element (10, 12) for water fittings according to Claim 1, **characterised in that** the surface (30) of the sleeve-type section is formed by the composite material.

3. The decorative element (10, 12) for water fittings according to any of the preceding claims, **characterised in that** the proportion of the filler (18) is between 50 and 90 % by weight, preferably between 60 and 80% by weight, relative to the mass of the sleeve-type section.

4. The decorative element (10, 12) for water fittings according to any of the preceding claims, **characterised in that** at least 80% by weight of the filler (18) has a particle size of between 0.01 and 1 mm.

5. The decorative element (10, 12) for water fittings according to Claim 1 or 2, **characterised in that** at least part of the filler (18) has a greater hardness than the binder (16).

6. The decorative element (10, 12) for water fittings according to any of the preceding claims, **characterised in that** at least part of the filler (18) has a Mohs hardness of at least 5, in particular at least 7.

7. The decorative element (10, 12) for water fittings according to any of the preceding claims, **characterised in that** the binder (16) is at least partially a cured acrylic resin.

8. The decorative element (10, 12) for water fittings according to any of the preceding claims, **characterised in that** at least part of the filler (18) is of a colour which differs from the colour of the binder (16).

9. The decorative element (10, 12) for water fittings according to any of the preceding claims, **characterised in that** at least part of the filler (18) has a coloured coating on its surface (30).

10. The decorative element (10, 12) for water fittings according to any of the preceding claims, **characterised in that** the sleeve-type section is produced as a cast part, and that the surface (30) of the sleeve-type section is at least partially formed by a cast skin (32) formed by the cured binder (16).

11. The decorative element (10, 12) for water fittings according to any of the preceding claims, **characterised in that** the cured binder forms slight depressions between the preferably mineral filler particles.

12. The decorative element (10, 12) for water fittings according to any of the preceding claims, **characterised in that** the surface (30) of the sleeve-type section is formed at least in part by the particulate filler (18).

13. The decorative element (10, 12) for water fittings according to any of the preceding claims, **characterised in that** the decorative element (10, 12) for water fittings has an outer peripheral surface (28) without gaps and joints in the sleeve-type section.

14. The decorative element (10, 12) for water fittings according to any of the preceding claims, **characterised in that** the proportion of the filler (18) by weight in the sleeve-type section in the peripheral direction varies in segments of one-eighth each by less than 10%, preferably by less than 5% and in particular by less than 3%.

15. The decorative element (10, 12) for water fittings according to any of the preceding claims, **characterised in that** the proportion of filler particles in the radially outer sleeve half is higher by more than 4% than in the radially inner sleeve half.

16. The decorative element (10, 12) for water fittings according to any of the preceding claims, **characterised in that** the sleeve-type section has an opening (22) for the passage of part (24) of the water fitting (1).

17. A method for producing a decorative element (10, 12) for water fittings with a sleeve-type section produced from plastic, and with which the decorative element (10, 12) for water fittings can be slipped onto the water fitting (1), the sleeve-type section being produced from a composite material by curing a polymer binder (16) with a particulate filler (18) incorporated into the latter, at least 95% by weight of the filler (18) having a particle size of between 0.001 and 5 mm, and the proportion of filler particles in the radially outer sleeve half being higher by more than 2% than in the radially inner sleeve half.

18. The method according to Claim 16, **characterised in that** the decorative element (10) of the device is produced by cast moulding.

## Revendications

1. Elément (10, 12) décoratif pour robinetterie d'eau, ayant une partie en forme de manchon en matière plastique, par laquelle l'élément (10, 12) décoratif pour robinetterie d'eau peut être emmanché sur la robinetterie (1) d'eau, la partie en forme de manchon étant en un matériau composite ayant un liant (16) polymère durci et une charge (18) sous forme de particules qui y est incorporée, au moins 95% en poids de la charge (18) ayant une granulométrie comprise entre 0,001 et 5 mm, **caractérisé en ce que** la proportion de particules de charge dans la moitié extérieure radialement du manchon est plus grande de plus de 2% que dans la moitié intérieure radialement du manchon.

2. Elément (10, 12) décoratif pour robinetterie d'eau suivant la revendication 1, **caractérisé en ce que** la surface (30) de la partie en forme de manchon est formée par le matériau composite.

3. Elément (10, 12) décoratif pour robinetterie d'eau suivant l'une des revendications précédentes, **caractérisé en ce que** la proportion de la charge (18) représente entre 50 et 95% en poids, de préférence entre 60 et 80% en poids, de la masse de la partie en forme de manchon.

4. Elément (10, 12) décoratif pour robinetterie d'eau suivant l'une des revendications précédentes, **caractérisé en ce qu'**au moins 80% en poids de la charge (18) ont une granulométrie comprise entre 0,01 et 1 mm.

5. Elément (10, 12) décoratif pour robinetterie d'eau suivant la revendication 1 ou 2, **caractérisé en ce qu'**au moins une partie de la charge (18) a une dureté plus grande que le liant (16).

6. Elément (10, 12) décoratif pour robinetterie d'eau suivant l'une des revendications précédentes, **caractérisé en ce qu'**au moins une partie de la charge (18) a une dureté Mohs d'au moins 5, notamment d'au moins 7.

7. Elément (10, 12) décoratif pour robinetterie d'eau suivant l'une des revendications précédentes, **caractérisé en ce que** le liant (16) est, au moins en partie, une résine acrylique durcie.

8. Elément (10, 12) décoratif pour robinetterie d'eau suivant l'une des revendications précédentes, **caractérisé en ce qu'**au moins une partie de la charge (18) a une couleur se distinguant de la couleur du liant (16).

9. Elément (10, 12) décoratif pour robinetterie d'eau suivant l'une des revendications précédentes, **caractérisé en ce qu'**au moins une partie de la charge (18) a un revêtement coloré sur sa surface (30).

10. Elément (10, 12) décoratif pour robinetterie d'eau suivant l'une des revendications précédentes, **caractérisé en ce que** la partie en forme de manchon est fabriquée sous la forme d'une pièce coulée et **en ce que** la surface (30) de la partie en forme de manchon est formée, au moins en partie, par une peau (32) de coulée formée par le liant (16) durci.

11. Elément (10, 12) décoratif pour robinetterie d'eau suivant l'une des revendications précédentes, **caractérisé en ce que** le liant durci forme des cavités petites entre les particules de charge, de préférence minérales.

12. Elément (10, 12) décoratif pour robinetterie d'eau suivant l'une des revendications précédentes, **caractérisé en ce que** la surface (30) de la partie en forme de manchon est formée, au moins en partie, par la charge (18) sous forme de particules.

13. Elément (10, 12) décoratif pour robinetterie d'eau suivant l'une des revendications précédentes, **caractérisé en ce que** l'élément (10, 12) décoratif pour robinetterie d'eau a, dans la partie en forme de manchon, une surface (28) périphérique extérieure sans fente et sans joint.

14. Elément (10, 12) décoratif pour robinetterie d'eau suivant l'une des revendications précédentes, **caractérisé en ce que** la proportion en poids de la charge (18) dans la partie en forme de manchon varie dans la direction périphérique en huitièmes de segment de moins de 10%, de préférence de moins de 5% et notamment de moins de 3%.

15. Elément (10, 12) décoratif pour robinetterie d'eau suivant l'une des revendications précédentes, **caractérisé en ce que** la proportion de particules de charge dans la moitié extérieure radialement du manchon est plus grande de plus de 4% que dans la moitié intérieure radialement du manchon.

16. Elément (10, 12) décoratif pour robinetterie d'eau suivant l'une des revendications précédentes, **caractérisé en ce que** la partie en forme de manchon a une ouverture (22) pour le passage d'une pièce (24) de la robinetterie (1) d'eau.

17. Procédé de fabrication d'un élément (10, 12) décoratif pour robinetterie d'eau, comprenant une partie en forme de manchon en matière plastique, par laquelle l'élément (10, 12) décoratif pour robinetterie d'eau peut être emmanché sur la robinetterie (1) d'eau, la partie en forme de manchon étant en un matériau composite ayant un liant (16) polymère durci et une charge (18) sous forme de particules qui y est incorporée, au moins 95% en poids de la charge (18) ayant une granulométrie comprise entre 0,001 et 5 mm, **caractérisé en ce que** la proportion de particules de charge dans la moitié extérieure radialement du manchon est plus grande de plus de 2% que dans la moitié intérieure radialement du manchon.

18. Procédé suivant la revendication 17, **caractérisé en ce qu'**on fabrique l'élément (10) décoratif par moulage par coulée.
